(19) Europäisches Patentamt
European Patent Office
Office européen des brevets

(11) Veröffentlichungsnummer : **0 163 858**
**B1**

(12) # EUROPÄISCHE PATENTSCHRIFT

(45) Veröffentlichungstag der Patentschrift : **08.07.87**

(51) Int. Cl.[4] : **C 09 J 3/14**, C 08 F222/00

(21) Anmeldenummer : **85104344.8**

(22) Anmeldetag : **10.04.85**

(54) **Stabilisierte Klebstoffe.**

(30) Priorität : **19.04.84 DE 3414805**

(43) Veröffentlichungstag der Anmeldung : **11.12.85 Patentblatt 85/50**

(45) Bekanntmachung des Hinweises auf die Patenterteilung : **08.07.87 Patentblatt 87/28**

(84) Benannte Vertragsstaaten : **AT BE CH DE FR GB IT LI NL SE**

(56) Entgegenhaltungen : **FR-A- 2 535 335**

(73) Patentinhaber : **BAYER AG**
**Konzernverwaltung RP Patentabteilung**
**D-5090 Leverkusen 1 Bayerwerk (DE)**

(72) Erfinder : **Waniczek, Helmut, Dr.**
**Wolfskaul 2**
**D-5000 Koeln 80 (DE)**
Erfinder : **Kniege, Wilfried**
**Alte Wipperfuerther Strasse 80**
**D-5060 Bergisch-Gladbach 2 (DE)**

**EP 0 163 858 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft stabilisierte Klebstoffe, denen zur Stabilisierung Silylester zugesetzt werden.

Es ist bekannt, daß monomere Cyanacrylsäureester durch geringe Mengen saurer Gase, z. B. $SO_2$ und Radikalfänger, z. B. Hydrochinon, gegen Polymerisation stabilisiert werden (z. B. PS-PS 27 94 783 und 27 65 332) können.

Jedoch weist die Verwendung von $SO_2$ eine Reihe von Nachteilen auf :

Es muß eine Konzentration von 0,001 bis 0,01 Gew.- % eingehalten werden, da bei höherer $SO_2$-Konzentration die Abbindegeschwindigkeit der Cyanacrylate abnimmt. Bei niederer Konzentration werden die Cyanacrylate nicht hinreichend stabilisiert. Wegen des gasförmigen Zustandes des Stabilisators und der geringen Konzentration läßt sich die Menge schlecht einstellen.

Die monomeren Cyanacrylate werden üblicherweise durch Depolymerisation von Polycyanacrylaten gewonnen. Bei dieser Herstellung wird zweckmäßigerweise in der Gasphase mehr von dem sauren Stabilisatorgas zugefügt, als zur Stabilisierung notwendig ist. Nach dem Abkühlen muß mittels zeitraubender Operationen überschüssiges $SO_2$ entfernt werden, um ein Produkt mit ausreichender Stabilität und Abbindegeschwindigkeit zu erhalten. Laufende Bestimmungen des $SO_2$-Gehaltes sind nötig. Schließlich gibt das solcherart stabilisierte Monomere unter bestimmten Bedingungen $SO_2$ ab.

Die bekannten, nicht gasförmigen Stabilisatoren z. B. Sulfonsäuren, besitzen entweder eine nur mäßig stabilisierende Wirkung oder sie verschlechtern die Abbindegeschwindigkeit stark. So wird z. B. ein Cyanacrylat-Klebstoff, der zwei Nitril-Kautschuk-Stücke in 2 Sekunden miteinander fest verbindet kann, durch den Zusatz von nur 0,5 Gew.- % Methansulfonsäure so verändert, daß eine Verklebung selbst in 10 Sekunden nicht mehr eintritt.

Weiterhin ist bekannt, um die Verzögerung der Abbindung von Cyanacrylaten zu verringern, Sulfonsäureanhydride, (z. B. DAS 2 128 985) zuzusetzen. Bei Verwendung von Sulfonsäureanhydriden wird jedoch noch immer nicht die hohe Abbindegeschwindigkeit und Lagerstabilität erreicht, die bei modernen Fertigungstechniken von Klebstoffen gewünscht wird. Wegen ihrer Hydrolyseempfindlichkeit enthalten sie fast immer Sulfonsäuren. Da bei der Lagerung oder Verwendung eines Klebstoffes Wasserspuren nur schwer ausgeschlossen werden können, kann der Anteil an Sulfonsäuren im Klebstoff sogar noch steigen.

Auch Siliziumverbindungen enthaltende Cyanacrylate sind bekannt und z. B. in der jap. Patentschrift 73 103 633 beschrieben. Diese Si-Verbindungen dienen jedoch zur Hydrophobierung der Cyanacrylate und tragen nicht zur Verbesserung der Lagerstabilität bei.

Es wurde nun gefunden, daß Cyanacrylat-Klebstoffe unter Vermeidung der genannten Nachteile durch einen Zusatz von Silylestern starker ein- oder mehrwertiger anorganischer oder organischer Mono- oder Polysäuren stabilisiert werden können. Die Abbindegeschwindigkeit und Lagerstabilität ist deutlich größer als bei den bisher bekannten stabilisierten Cyanacrylat-Klebstoffen.

Gegenstand der Erfindung sind daher stabilisierte Klebstoffe bestehend aus anionisch polymerisierbaren monomeren Olefinen der Formel (I)

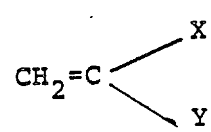

(I)

in welcher

X für CN und COOR und

Y für CN, Halogen, wie Chlor und Brom, $SO_3R$ und —COOR steht, und R für eine $C_1$-$C_{20}$-Alkyl oder Alkenyl-Gruppe, $C_5$-$C_{10}$-Cycloalkylgruppe oder eine Arylgruppe mit 6 C-Atomen wie Phenyl steht und einem Silylester einer starken Säure und gegebenenfalls anderen üblichen Zusätzen.

Als anionisch polymerisierbare monomere Olefine können z. B. Cyanacrylsäureester der Formel (II)

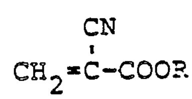

(II)

wobei R die bei Formel (I) beschriebene Bedeutung besitzt, Methylenmalodinitril oder Verbindungen der Formel (III)

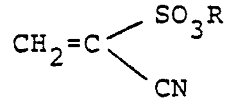

(III)

wobei R ebenfalls die bei Formel (I) beschriebene Bedeutung besitzt, verwendet werden.

Bevorzugt werden Cyanacrylsäureester der Formel (II) verwendet.

Erfindungsgemäß werden Silylester starker ein- oder mehrwertiger anorganischer oder organischer Mono- oder Polysäuren verwendet, z. B. Mono-, Di- oder Trialkylsilylester von starken Säuren wie Halogenwasserstoffsäuren, Mono-, Di- oder Trischwefelsäure, Mono-, Di- oder Polyphosphorsäure, substituierte oder unsubstituierte Alkyl-, Cycloalkyl-, Aryl- oder Aralkylsulfonsäuren, Chlorsulfonsäure, Sulfinsäureester, Salpetersäure oder substituierte oder unsubstituierte Carbonsäuren.

Beispiele für Silylester starker ein- oder mehrbasiger anorganischer oder organischer Mono- oder Polysäuren sind Tetrachlorsilan, Methyl-, Ethyl- und Butyltrichlorsilan, Dimethyl-, Diethyl- oder Dibutyldichlorsilan, Trimethyl-, Triethyl- oder Tributylchlorsilan, Bis-trimethylsilylschwefelsäure, Bis-triethylsilyldischwefelsäure, Bis-tributyltrischwefelsäure, dimeres Dimethylsilylsulfat, Tris-trimethyl-, Tris-triethyl- oder Tris-tributylphosphat, -Butyl-4,6-dimethyl-1,2,6-oxathiosilinan-2,2-dioxid, Trimethylsilylchlorsulfonat, Trimethylsilylmethansulfinat, Trimethylsilylnitrat oder Trimethylsilyltrifluoracetat.

Bevorzugt sind Bis-trialkylsilylester der Mono-, Di- und Trischwefelsäure der Formel (IV)

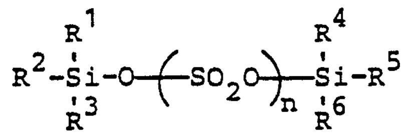

(IV)

wobei

$R^1$ bis $R^6$ gleich oder verschieden sind und eine $C_1$-$C_{10}$-Alkyl-, Aryl- oder -Aralkylgruppe darstellen, und

n eine ganze Zahl von 1 bis 3 ist.

Ganz besonders bevorzugt sind Bis-trialkylsilylester der Monoschwefelsäure wie Bis-trimethylsilylsulfat.

Die Herstellung der erfindungsgemäß einzusetzenden Stabilisatoren für Klebstoffe erfolgt nach bekannten Methoden. Eine Zusammenfassung für ihre Herstellung findet man z. B. in Houben-Weyl, Methoden der organischen Chemie, Band 13/5, Seiten 163 bis 175, 4. Auflage, Georg Thieme Verlag Stuttgart-New York, 1980.

Die Überlegenheit der erfindungsgemäß einzusetzenden Stabilisatoren für anionisch leicht polymerisierbare Monomere liegt darin, daß sie einfach herzustellen und einfach zu handhaben sind und daß sie gegenüber dem Stand der Technik eine schnellere Abbindung und eine erhöhte Lagerstabilität der Klebstoffe ergeben.

Ein weiterer Vorteil der erfindungsgemäßen Stabilisatoren besteht darin, daß sie bei der Synthese von anionisch leicht polymerisierenden Monomeren wie α-Cyanacrylaten als anionischer Inhibitor eingesetzt werden können. Dadurch entfällt die Zugabe bekannter Stabilisatoren bei der Herstellung, so daß sie trivialer Weise auch nicht mit aufwendigen Methoden entfernt werden müssen.

Die erfindungsgemäß verwendbaren Stabilisatoren, z. B. die Silylester von anorganischen Säuren wie Phosphorsäure oder Schwefelsäure besitzen weiterhin den Vorteil, daß ihre Zerfallsprodukte bei Einwirkung von z. B. Feuchtigkeit keine destillierbaren, sauren Verbindungen liefern. Stabilisiert man z. B. Cyanacrylate mit Sulfonsäureanhydriden, so kann dieses Cyanacrylat kaum durch Destillation von evtl. vorhandener Sulfonsäure befreit werden. Enthält ein Cyanacrylat jedoch z. B. erfindungsgemäß Bis-trimethylsilylschwefelsäure, so entsteht durch Feuchtigkeitseinfluß Schwefelsäure und Hexamethyldisiloxan. Destilliert man ein so stabilisiertes Cyanacrylat, so destillieren unter entsprechenden Bedingungen nur der Stabilisator und das Cyanacrylat. Das eventuell mit destillierende Hexymethyldisiloxan hat keinerlei nachteilige Wirkung.

Die dem monomerem Olefin zuzusetzende Menge Stabilisator beträgt 0,000 5 bis 3 Gew.-%. Bevorzugt wird ein Gehalt an erfindungsgemäßen Stabilisatoren von 0,001 bis 1 Gew.-%, besonders bevorzugt von 0,001 bis 0,1 Gew.-%, bezogen auf Gewichtsmenge eingesetztes Olefin.

Den anionisch leicht polymerisierbaren Monomeren können in besonderen Fällen außer den erfindungsgemäßen Stabilisatoren gegebenenfalls noch andere Zusätze, z. B. Stabilisatoren der anionischen und radikalischen Polymerisation wie $SO_2$, Sulfonsäuren, Sulfonsäureanhydride, Hydrochinon, p-Methoxyphenol oder Chinon zugesetzt werden.

Weiterhin können die erfindungsgemäßen stabilisierten Klebstoffe weitere übliche Zusätze enthalten, die z. B. die Viskosität beeinflussen oder die Sprödigkeit des ausgehärteten Klebstoffes verringern. Diese Maßnahmen sind in der Literatur bereits beschrieben. So ist es möglich, Polymere wie Polymethylmethacrylat, Füllstoffe wie hochdisperse Silica oder Weichmacher wie Trikresylphosphat zuzusetzen.

Die erfindungsgemäß stabilisierten, anionisch leicht polymerisierbaren Monomere wie α-Cyanacrylate eignen sich hervorragend als lagerstabile, schnell abbindende Einkomponenten-Klebstoffe. Insbesondere in dünnen Schichten besitzen sie eine rasche Abbindung. Es können mit den erfindungsgemäß stabilisierten Cyanacrylaten die verschiedensten Substrate wie Kunststoffe, Metalle, Steingut, Holz oder Glas verklebt werden.

Beispiel 1

100 g des durch Depolymerisation von Polycyanacrylsäuremethylester hergestellten α-Cyanacrylsäuremethylesters werden mit den in der folgenden Tabelle angegebenen Mengen an Bis-trimethylsilylsulfat (BTSS) versetzt. Zur Prüfung der Lagerstabilität werden die Proben in Flaschen aus Polyethylen gefüllt und in einem Wärmeschrank bei 77 °C gelagert. Die Lagerstabilität wird gemessen, indem die Proben in regelmäßigen Zeitabständen auf Raumtemperatur abgekühlt und ihr Aggregatszustand beurteilt wird.

Zur Prüfung der Abbindegeschwindigkeit werden mit den wie angegebenen stabilisierten Cyanacrylat-Klebstoffen einschnittig überlappte Klebungen hergestellt wie sie in VDI 2 229 (5.1.1.) beschrieben sind, wobei als Fügewerkstoffe Eisen (ST 1 303) und SMC (vernetztes ungesättigtes glasfaserverstärktes Polyesterharz) verwendet werden. Die Probenherstellung sowie Bestimmung der Klebfestigkeit erfolgt durch Zugscherversuch nach DIN 53 283. Beurteilt werden die Zugscherfestigkeiten in verschiedenen Zeitabständen nach Herstellung der Klebung.

| | BTSS (mg) | Aggregatszustand nach x Stunden Lagerung bei 77°C | | | | | |
|---|---|---|---|---|---|---|---|
| | | x Stunden | | | | | |
| | | 12 | 24 | 36 | 48 | 60 | 72 |
| a) | 25,6 | dünnfl- | dünnfl. | dünnfl. | etwas viskoser | viskos | wachsartig |
| b) | 12,8 | " | " | " | dünnfl. | leicht viskos | viskos |
| c) | 6,4 | " | " | " | " | dünnfl. | etwas viskoser |
| d) | 3,2 | " | " | " | etwas viskoser | viskos | wachsartig |
| e) | 1,6 | " | " | " | viskos | wachsartig | hart |

Zugscherfestigkeit (MPa):

| | BTSS | Eisen/Eisen Abbindezeit (Minuten) | | | SMC/SMC Abbindezeit (Minuten) | | | |
|---|---|---|---|---|---|---|---|---|
| | (mg) | 15 | 30 | 1440 | 7,5 | 15 | 30 | 1440 |
| a) | 25,6 | | | | 1,7 | 3,3 | 5,1 | 9,9* |
| b) | 12,8 | | | | 3,1 | 8,4 | 8,7* | 10,0* |
| c) | 6,4 | 9,2 | 10,0 | 10,1 | 7,6 | 9,0* | 9,6* | 11,3* |
| d) | 3,2 | 11,5 | 9,2 | 9,6 | 8,3* | 10,3* | 8,7* | 10,0* |
| e) | 1,6 | 11,4 | 11,2 | 11,0 | 9,7* | 9,9* | 10,7* | 10,3* |

* vorwiegend Fügeteilausriß

Die angegebenen Zugscherfestigkeitswerte stellen Mittelwerte aus jeweils 10 Einzelmessungen dar.

Vergleichsbeispiel

Wie in Beispiel 1 wurden 100 g Cyanacrylsäuremethylester mit den in der folgenden Tabelle angegebenen Mengen an Methansulfonsäureanhydrid (MSA) versetzt und die Lagerstabilität und Abbindegeschwindigkeit gemessen :

(Siehe Tabelle Seite 5 ff.)

| | MSA (mg) | Aggregatszustand nach x Stunden Lagerung bei 77°C 12 | 24 | 36 | 48 | 60 | 72 |
|---|---|---|---|---|---|---|---|
| a) | 25,6 | viskos | hochviskos | hart | | | |
| b) | 12,8 | viskos | hochviskos | hart | | | |
| c) | 6,4 | viskos | hochviskos | hart | | | |
| d) | 3,2 | hochvis-kos | hart | | | | |
| e) | 1,6 | hart | hart | | | | |

Zugscherfestigkeit (MPa):

| | MSA (mg) | Eisen/Eisen Abbindezeit (Minuten) | | | SMC/SMC Abbindezeit (Minuten) | | | |
|---|---|---|---|---|---|---|---|---|
| | | 15 | 30 | 1440 | 7,5 | 15 | 30 | 1440 |
| a) | 25,6 | | | | 0,1 | 0,1 | 0,6 | 8,5* |
| b) | 12,8 | | | | 0,1 | 1,5 | 1,1 | 8,5* |
| c) | 6,4 | 6,8 | 5,7 | 10,1 | 0,1 | 2,6 | 2,8 | 8,6* |
| d) | 3,2 | 5,4 | 5,5 | 12,4 | 4,8 | 5,6 | 4,7 | 8,3 |
| e) | 1,6 | 7,5 | 7,1 | 10,1 | 6,0 | 4,2 | 5,2 | 8,5* |

* vorwiegend Fügeteilausriß

Die angegebenen Zugscherfestigkeitswerte stellen Mittelwerte aus jeweils 10 Einzelmessungen dar. Die angegebenen Meßergebnisse zeigen, daß die erfindungsgemäß stabilisierten Klebstoffe eine hohe Abbindegeschwindigkeit und hohe Lagerstabilität besitzten.

## Patentansprüche

1. Stabilisierte Klebstoffe bestehend aus anionisch polymerisierbaren monomeren Olefinen der Formel

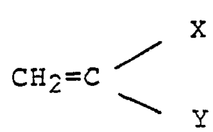

(I)

in welcher
X für CN und COOR und
Y für Halogen, $SO_3R$ und —COOR steht, und
R für eine $C_1$-$C_{20}$-Alkyl- oder Alkenylgruppe $C_5$-$C_{10}$-Cycloalkylgruppe oder eine Arylgruppe steht und einem Silylester einer starken Säure und gegebenenfalls üblichen Zusätzen.

2. Klebstoffe nach Anspruch 1, dadurch gekennzeichnet, daß α-Cyanacrylat als anionisch polymerisierbares monomeres Olefin verwendet wird.

3. Stabilisierte Klebstoffe gemäß Anspruch 1, dadurch gekennzeichnet, daß als Stabilisator ein Bis-Trialkylsilylester der Mono-, Di- oder Trischwefelsäure der allgemeinen Formel (IV)

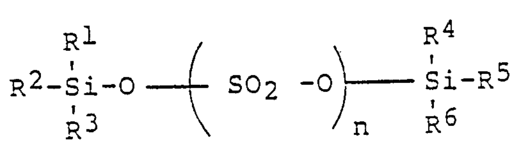

(IV)

wobei

$R^1$ bis $R^6$ gleich oder verschieden sind und eine $C_1$-$C_{10}$-Alkyl-, -Aryl- oder -Aralkylgruppe darstellen, und

n eine ganze Zahl von 1 bis 3 ist,

verwendet wird.

4. Stabilisierte Klebstoffe gemäß Anspruch 1, dadurch gekennzeichnet, daß die substituierten Olefine der allgemeinen Formel I in Gegenwart der erfindungsgemäßen Stabilisatoren hergestellt werden.

5. Verwendung der gemäß den Ansprüchen 1 bis 4 stabilisierten Monomere als Klebstoffe.

## Claims

1. Stabilised adhesives consisting of anionically polymerisable monomeric olefins of the formula

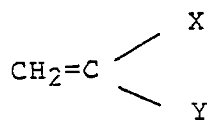

(I)

in which

X represents CN and COOR and

Y represents halogen, $SO_3R$ and —COOR, and

R represents a $C_1$-$C_{20}$-alkyl or alkenyl group $C_5$-$C_{10}$-cycloalkyl group or an aryl group,

and a silyl ester of a strong acid and, optionally, customary additives.

2. Adhesives according to Claim 1, characterised in that α-cyanacrylate is used as the anionically polymerisable monomeric olefin.

3. Stabilised adhesives according to Claim 1, characterised in that a bis-trialkylsilyl ester of mono-, di- or trisulphuric acid of the general formula (IV)

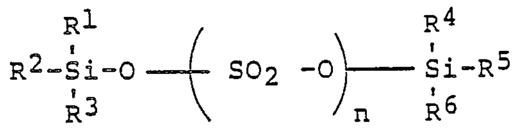

(IV)

wherein

$R^1$ to $R^6$ are identical or different and represent a $C_1$-$C_{10}$-alkyl, -aryl or -aralkyl group and

n is an integer from 1 to 3,

is used as the stabiliser.

4. Stabilised adhesives according to Claim 1, characterised in that the substituted olefins of the general formula I are produced in the presence of the stabilisers according to the invention.

5. Use of the monomers stabilised according to Claims 1 to 4 as adhesives.

## Revendications

1. Adhésifs stabilisés consistant en oléfines monomères anioniquement polymérisables de formule :

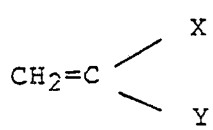

(I)

dans laquelle

X représente CN et COOR et

Y de l'halogène, $SO_3R$ et —COOR,

R un groupe alcoyle ou alcényle en $C_1$-$C_{20}$, cycloalcoyle en $C_5$-$C_{10}$ ou un groupe aryle

et en un ester silylique d'un acide fort et éventuellement en des additifs usuels.

2. Adhésifs selon la revendication 1, caractérisés en ce qu'on utilise un α-cyanacrylate comme oléfine monomère anioniquement polymérisable.

3. Adhésifs stabilisés selon la revendication 1, caractérisés en ce qu'on utilise comme stabilisateur un ester de bis-trialcoylsilyle d'acide mono-, di- ou trisulfurique de formule générale (IV)

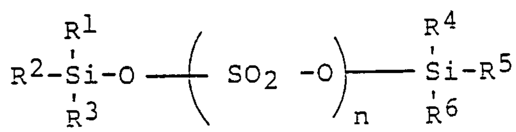

(IV)

dans laquelle

$R^1$ à $R^6$ sont identiques ou différents et représentent un groupe alcoyle en $C_1$-$C_{10}$, aryle ou aralcoyle et

n un nombre entier de 1 à 3.

4. Adhésifs stabilisés selon la revendication 1, caractérisés en ce que les oléfines substituées de formule générale I sont préparées en présence des stabilisateurs conformes à l'invention.

5. Utilisation des monomères stabilisés selon les revendications 1 à 4 comme adhésifs.